# EUROPEAN PATENT APPLICATION

(11) **EP 4 183 610 A1**
(43) Date of publication of application: **24.05.2023**
(21) Application number: 22208568.0
(22) Date of filing: 21.11.2022
(51) Int. Cl.: B60K 17/356, B62D 13/00, B65D 81/38, G06Q 10/08

(54) **OPENING MECHANISM FOR ACTUATING A LID OF A ROBOTIC VEHICLE**

(30) Priority: 22.11.2021 RU 2021133959
(71) Applicant: YANDEX SELF DRIVING GROUP LLC, Moscow, Skolkovo 121205 (RU)
(72) Inventor: KHALIZOV, Mikhail Vladimirovich, Moscow (RU); BADANOV, Sergey Aleksandrovich, Moscow (RU); SHERSTOBITOV, Ivan Vladimirovich, Moscow (RU)
(74) Representative: Sach, Greg Robert

(57) **Abstract**

A robotic vehicle is disclosed. The robotic vehicle comprises: a robotic vehicle body (220) defining a storage compartment (402); a lid for closing the storage compartment (402); and an opening mechanism (306) installable on an exterior of the robotic vehicle body (220) connecting the lid to the robotic vehicle body for actuating the lid between an open configuration and a closed configuration, the opening mechanism (306) comprising: a semi-tubular body (502) coupled to an outer surface of the lid, the semi-tubular body (502) including a first rotational plate (504) disposed at a first edge thereof; and an actuator (508) disposed inside of the semi-tubular body (502) and coupled to the exterior of the robotic vehicle body (220), the actuator (508) being operatively coupled to an inner surface of the first rotational plate (504), the actuator (508) being configured to impart a torque onto the first rotational plate (504), thereby causing the semi-tubular body (502) to pivot and actuate the lid for providing access to the storage compartment (402).

## Description

### FIELD

The present technology generally relates to robotic vehicles and, in particular, to an opening mechanism for actuating a lid of a robotic vehicle.

### BACKGROUND

Recent technological developments of self-diving vehicles, such as robotic vehicles have advanced to the point of being implemented in certain practical commercial applications. One such commercial application is in the service area, particularly, for the transport and delivery of consumer items, such as ordered or un-ordered consumer items. Thus, such a robotic vehicle may define a storage compartment with a lid, coupled via a hinge to a robotic vehicle body, allowing for secure transportation of the consumer-ordered items.

To ensure the safe, reliable transport and delivery of the consumer items, the robotic vehicles may be designed to be equipped with a processor communicatively coupled to various on-board navigational and control guidance systems/resources, such as, for example, radar, LIDAR, sonar, GPS, odometry, inertial measurement processes, sensor information processes, obstacle/traffic signage recognition, *etc.* Thus, the processor of the robotic vehicle can be configured to cause the robotic vehicle to move along a predetermined trajectory, for example, towards a consumer for which a current delivery is destined; and upon reaching the consumer, the processor can be configured to actuate the lid of the storage compartment to provide the consumer with access to the contents of the storage compartment, thereby allowing the consumer to pick up the items they have ordered or otherwise desire to obtain.

### SUMMARY

One of the aspects contributing to an improved reliability of a robotic vehicle is an evenness of actuating the lid of the storage compartment. For example, uneven opening or closing the lid may cause the lid to skew at the hinge thereof, which may further cause damage and/or premature wear of certain components of the robotic vehicle, such as the hinge, the lid, or the storage compartment. Accordingly, damaged components may not provide expected level of protection to the consumer-ordered items during the delivery thereof to the consumer, and thus may affect their user experience of interacting with the robotic vehicle.

Certain prior art approaches have been proposed to address the above-identified technical problem.

U.S. Patent No.: 8,569,980-B2 issued on October 29, 2013, assigned to Simplehuman LLC, and entitled *"TRASH CAN WITH POWER OPERATED LID"* discloses a trash can including a sensor for detecting the presence of an object near a portion of the trash can. The detection of the object can be used to signal the trash can to open its lid. The trash can include an electronic drive unit for opening and closing the lid.

U.S. Patent No.: 9,535,421-B1 issued on January 3, 2017, assigned to Savioke Inc., and entitled *"MOBILE DELIVERY ROBOT WITH INTERIOR CARGO SPACE"* discloses a mobile robot including an elongated body disposed in a vertical direction and having an approximately cylindrical shape; a user interface within an upper 20 centimeters of the body and inclined to be accessible from above and in front of the robot; at least one depth sensor that is mounted at or near a top of the body and having at least one field of view; at least one container formed within the body; and a drive mechanism disposed within the body.

U.S. Patent No.: 7,114,534-B2 issued on March 10, 2006, assigned to Playtex Products LLC, and entitled *"COMPOSITE TRASH CONTAINER"* discloses a composite trash container that includes a container body defining a trash chamber and an opening that provides access to the trash chamber; a support mounted to the container body adjacent the opening, the support having a flange extending therefrom that is configured for rotational mounting a tubing cassette above the trash chamber, wherein the support encloses less than all of the opening to the trash chamber so that trash can be passed through the opening and into the trash chamber; a tubing cassette rotationally mounted to the flange of the support; and a tube sealing means for forming trash packets from tubing that is dispensed from the tubing cassette.

**Hong Kong Short-term Patent No.:** 30009876-A2 issued on June 26, 2020, assigned to Rice Robotics LTD, and entitled *"A SERVICE ROBOT WITH LARGE STORAGE CAPACITY AND ADJUSTABLE SPACE"* discloses a service robot with large storage capacity and adjustable space, which comprises an internal hollow robot body. The robot body further included: a storage tray housed inside the hollow body of the robot, which is detachably mounted in the body of the robot. The storage tray can open upwards. At least one partitioning mechanism is provided in the storage tray for separating the internal space of the storage tray; the top flap is for covering and opening the top of the storage tray. The side edge of the top flap is hinged to a top edge of the robot body. A mechanism is designed for controlling opening and closing of the top flap. The opening and closing mechanism is installed on an inner side wall of the robot body, and the inner side wall is a top flap and a side of the robot body hinged. The display screen is embedded on a top end cover fixedly connected to the top edge of the robot body. The top end cover is combined with the top flip cover to form the top of the robot.

Developers of the present technology have devised an opening mechanism for the robotic vehicle. In some embodiments of the present technology, the opening mechanism may allow even actuation of the lid therealong. More specifically, the developers have appreciated that the opening mechanism may be implemented as an outer hinge couplable to an exterior of a robotic vehicle body, on one side; and on the other side - to the lid. Thus, according to at least some non-limiting embodiments of the present technology, the opening mechanism may comprise a cylindrical body longitudinally disposed along the robotic vehicle body connected to the lid and enclosing an actuator coupled to the exterior of the robotic vehicle body. The cylindrical body may include rotational plates disposed at edges thereof.

Further, the actuator may be operatively coupled to a given one of the rotational plates of the cylindrical body; and the processor of the robotic vehicle can be configured to cause the actuator to impart a torque onto the given one of the rotational plates, thereby causing the cylindrical body of the opening mechanism to pivot and actuate the lid. Once the torque is imparted onto a given rotational plate, the cylindrical body may thus be configured to evenly distribute it between both rotational plates, which may allow smoothly actuating the lid, avoiding skewing thereof. This may further provide for an improved reliability of the robotic vehicle and user experience of interacting therewith.

Thus, in accordance with a first broad aspect of the present technology, there is provided a robotic vehicle. The robotic vehicle comprises: a robotic vehicle body defining a storage compartment; a lid for closing the storage compartment; and an opening mechanism installable on an exterior of the robotic vehicle body connecting the lid to the robotic vehicle body for actuating the lid between an open configuration and a closed configuration, the opening mechanism comprising: a semi-tubular body coupled to an outer surface of the lid, the semi-tubular body including a first rotational plate disposed at a first edge thereof; and an actuator disposed inside of the semi-tubular body and coupled to the exterior of the robotic vehicle body, the actuator being operatively coupled to an inner surface of the first rotational plate, the actuator being configured to impart a torque onto the first rotational plate, thereby causing the semi-tubular body to pivot and actuate the lid for providing access to the storage compartment.

In some implementations of the robotic vehicle, the semi-tubular body further comprises a second rotational plate disposed at a second edge thereof, opposite to the first edge.

In some implementations of the robotic vehicle, the semi-tubular body is configured for evenly distributing the torque imparted by the actuator between the first rotational plate and the second rotational plate during the actuating the lid between the open configuration and the closed configuration.

In some implementations of the robotic vehicle, the opening mechanism is configured for preventing skewing of the lid during actuation thereof.

In some implementations of the robotic vehicle, the actuator is configured to impart the torque for causing the lid to lift at one of a plurality of opening angles.

In some implementations of the robotic vehicle, the robotic vehicle further comprises: a processor installed within the robotic vehicle body and communicatively coupled to the actuator; a proximity sensor installed within the robotic vehicle body and communicatively coupled to the processor, the proximity sensor being configured for determining presence of an object in a surrounding area of the robotic vehicle; and wherein the processor is configured to cause the actuator to cause the semi-tubular body to pivot in response to the determining the presence of the object.

In some implementations of the robotic vehicle, the proximity sensor is implemented as a LiDAR sensor.

In some implementations of the robotic vehicle, the robotic vehicle is for delivery of one of consumer-ordered and non-ordered items.

In some implementations of the robotic vehicle, the actuator is a motor.

Further, in accordance with a second broad aspect of the present technology, there is provided an opening mechanism for actuating a lid of a robotic vehicle between an open configuration and a closed configuration. The opening mechanism is installable onto an exterior of a robotic vehicle body of the robotic vehicle. The opening mechanism couples the lid to the robotic vehicle body. The opening mechanism comprises: a semi-tubular body coupled to an outer surface of the lid, the semi-tubular body including a first rotational plate disposed at a first edge thereof; and an actuator disposed inside of the semi-tubular body and coupled to the exterior of the robotic vehicle body, the actuator being operatively coupled to an inner surface of the first rotational plate, the actuator being configured to impart a torque onto the first rotational plate, thereby causing the semi-tubular body to pivot and actuate the lid.

In some implementations of the opening mechanism, the semi-tubular body further comprises a second rotational plate disposed at a second edge thereof, opposite to the first edge.

In some implementations of the opening mechanism, the semi-tubular body is configured for evenly distributing the torque imparted by the actuator between the first rotational plate and the second rotational plate during the actuating the lid between the open configuration and the closed configuration.

In some implementations of the opening mechanism, the opening mechanism is configured for preventing skewing of the lid during actuation thereof.

In some implementations of the opening mechanism, the actuator is configured to impart the torque for causing the lid to lift at one of a plurality of opening angles.

In the context of the present specification, "electronic device" denotes any computer hardware that is capable of running software appropriate to the relevant task at hand. In the context of the present specification, the term "electronic device" implies that a device can function as a server for other electronic devices and client devices, however it is not required to be the case with respect to the present technology. Thus, some (non-limiting) examples of electronic devices include personal computers (desktops, laptops, netbooks, etc.), smart phones, and tablets, as well as network equipment such as routers, switches, and gateways. It should be understood that in the present context the fact that the device functions as an electronic device does not mean that it cannot function as a server for other electronic devices. The use of the expression "an electronic device" does not preclude multiple client devices being used in receiving/sending, carrying out or causing to be carried out any task or request, or the consequences of any task or request, or steps of any method described herein.

For purposes of this application, terms related to spatial orientation such as forwardly, rearwardly, upwardly, downwardly, left, and right, are as they would normally be understood by a user or operator of the robotic vehicle. Terms related to spatial orientation when describing or referring to components or sub-assemblies of the device, separately from the robotic vehicle should be understood as they would be understood when these components or sub-assemblies are mounted to the robotic vehicle.

Implementations of the present technology each have at least one of the above-mentioned aspects, but do not necessarily have all of them. It should be understood that some aspects of the present technology that have resulted from attempting to attain the above-mentioned object may not satisfy this object and/or may satisfy other objects not specifically recited herein.

Additional and/or alternative features, aspects, and advantages of implementations of the present technology will become apparent from the following description, the accompanying drawings, and the appended claims.

### BRIEF DESCRIPTION OF THE FIGURES

Further features and advantages of the present disclosure will become apparent from the following detailed description taken in combination with the appended drawings, in which:
Figure 1 depicts a schematic diagram of an example computer system for use in some implementations of systems and/or methods of the present technology;
Figure 2 depicts a networked computing environment including a robotic vehicle, suitable for use with some implementations of the present technology;
Figures 3 and 4 depict perspective views of a robotic vehicle present in the networked computing environment of Figure 2 in a closed and open configuration thereof, respectively, in accordance with certain non-limiting embodiments of the present technology; and
Figures 5 and 6 depict a perspective and exploded views of an opening mechanism for a lid of the robotic vehicle of Figures 3 and 4, in accordance with certain non-limiting embodiments of the present technology.

It is to be understood that throughout the appended drawings and corresponding descriptions, like features are identified by like reference characters and that the drawings are not to scale. It should also be understood that the drawings and ensuing descriptions are intended for illustrative purposes only and that such disclosures are not intended to limit the scope of the claims.

### DETAILED DESCRIPTION

The present disclosure is directed to an opening mechanism for the lid of the robotic vehicle which may allow preventing the lid from skewing during actuation thereof.

It will be understood, however, that the examples and conditional language recited herein are principally intended to aid the reader in understanding the principles of the present technology and not to limit its scope to such specifically recited examples and conditions. It will be appreciated that those skilled in the art may devise various arrangements that, although not explicitly described or shown herein, nonetheless embody the principles of the present technology and are included within its spirit and scope.

Furthermore, as an aid to understanding, the following description may describe relatively simplified implementations of the present technology. As persons skilled in the art would understand, various implementations of the present technology may be of a greater complexity. In some cases, what are believed to be helpful examples of modifications to the present technology may also be set forth. This is done merely as an aid to understanding, and, again, not to define the scope or set forth the bounds of the present technology. These modifications are not an exhaustive list, and a person skilled in the art may make other modifications while nonetheless remaining within the scope of the present technology.

Moreover, where no examples of modifications have been set forth, it should not be interpreted that no modifications are possible and/or that what is described is the sole manner of implementing that element of the present technology. As such, all statements herein reciting principles, aspects, and implementations of the present technology, as well as specific examples thereof, are intended to encompass both structural and functional equivalents thereof, whether they are currently known or developed in the future.

It will be appreciated by those skilled in the art that any block diagrams herein represent conceptual views of illustrative circuitry embodying the principles of the present technology. Similarly, it will be appreciated that any flowcharts, flow diagrams, state transition diagrams, pseudocode, and the like represent various processes that may be substantially represented in non-transitory computer-readable media and so executed by a computer or processor, whether or not such computer or processor is explicitly shown.

Similarly, functions of the various elements shown in the figures, including any functional block labeled as a "processor", may be provided through the use of dedicated hardware as well as hardware capable of executing software in association with appropriate software.

With these fundamentals in place, presented heretofore are non-limiting embodiments that illustrate various inventive aspects and implementations of the present disclosure.

### Computer system

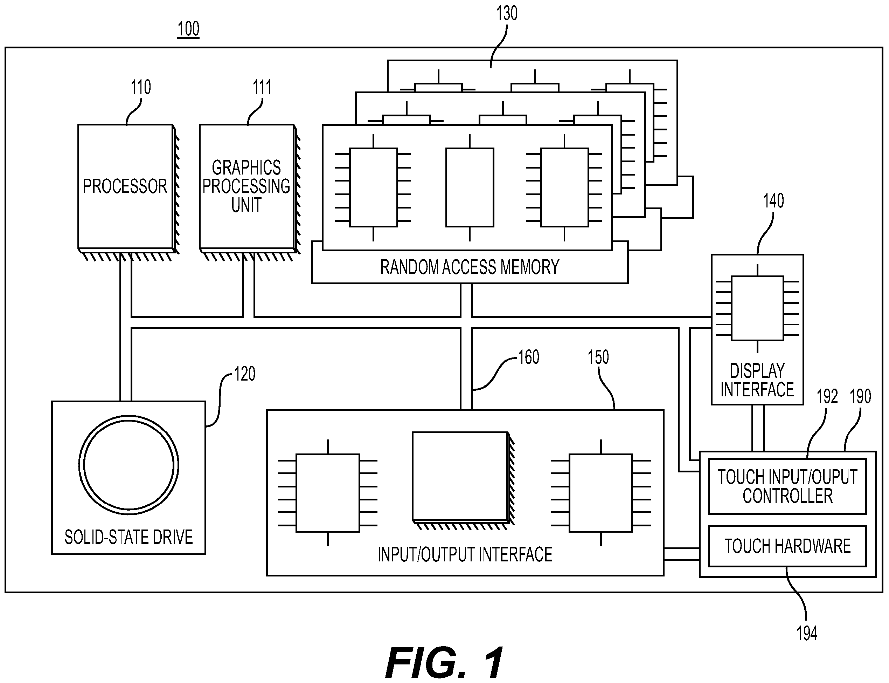

With reference to Figure 1, there is depicted a computer system 100 suitable for use with some implementations of the present technology. The computer system 100 comprises various hardware components including one or more single or multi-core processors collectively represented by a processor 110, a graphics processing unit (GPU) 111, a solid-state drive 120, a random-access memory 130, a display interface 140, and an input/output interface 150.

Communication between the various components of the computer system 100 may be enabled by one or more internal and/or external buses 160 (e.g. a PCI bus, universal serial bus, IEEE 1394 "Firewire" bus, SCSI bus, Serial-ATA bus, etc.), to which the various hardware components are electronically coupled.

The input/output interface 150 may be coupled to a touchscreen 190 and/or to the one or more internal and/or external buses 160. The touchscreen 190 may be part of the display. In some non-limiting embodiments of the present technology, the touchscreen 190 is the display. The touchscreen 190 may equally be referred to as a screen 190. In the embodiments illustrated in Figure 1, the touchscreen 190 comprises touch hardware 194 (e.g., pressure-sensitive cells embedded in a layer of a display allowing detection of a physical interaction between a user and the display) and a touch input/output controller 192 allowing communication with the display interface 140 and/or the one or more internal and/or external buses 160. In some embodiments, the input/output interface 150 may be connected to a keyboard (not shown), a mouse (not shown) or a trackpad (not shown) allowing the user to interact with the computer system 100 in addition to or instead of the touchscreen 190.

It is noted that some components of the computer system 100 can be omitted in some non-limiting embodiments of the present technology. For example, the touchscreen 190 can be omitted, especially (but not limited to) where the computer system is implemented as a server.

According to implementations of the present technology, the solid-state drive 120 stores program instructions suitable for being loaded into the random-access memory 130 and executed by the processor 110 and/or the GPU 111. For example, the program instructions may be part of a library or an application.

### Networked Computing Environment

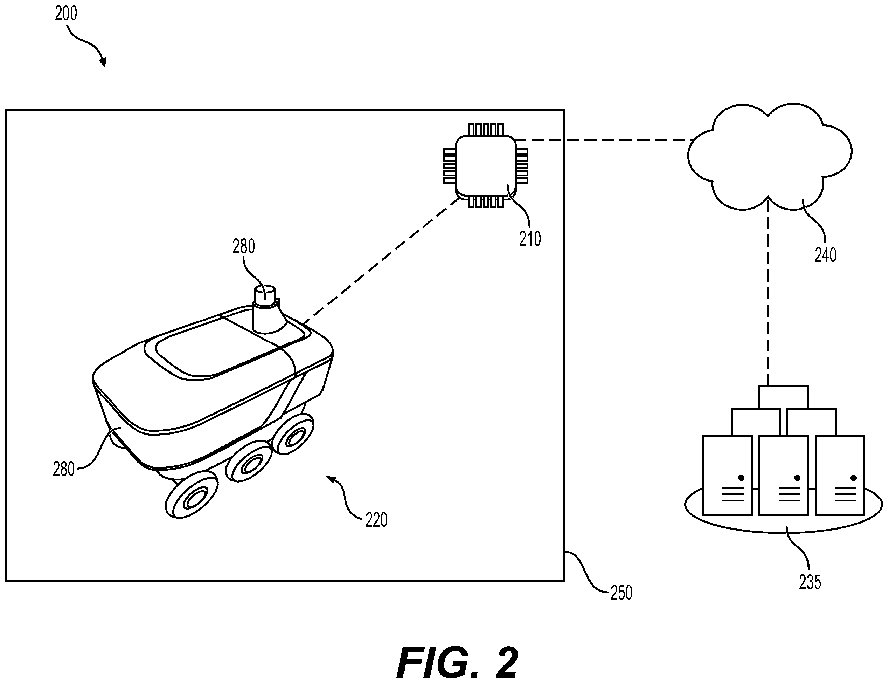

Figure 2 shows a networked computing environment 200 suitable for use with some non-limiting implementations of the present technology. The networked computing environment 200 includes a computing device 210 associated with a robotic vehicle 220. The environment 200 also includes one or more servers 235 in communication with the computing device 210 via a communication network 240 (e.g., the Internet or the like).

In at least some non-limiting implementations of the present technology, the computing device 210 is communicatively coupled to control systems of the robotic vehicle 220. The computing device 210 can be arranged and configured to control different operations systems of the robotic vehicle 220, including but not limited to: motor control, steering systems, and signaling and illumination systems.

In some non-limiting implementations of the present technology, the networked computing environment 200 can include a GPS satellite (not depicted) transmitting and/or receiving a GPS signal to/from the computing device 210. It will be understood that the present technology is not limited to GPS and may employ a positioning technology other than GPS. It should be noted that the GPS satellite can be omitted altogether.

The robotic vehicle 220, to which the computing device 210 is associated, can be any robotic vehicle, for delivery applications, warehouse applications, or the like. However, such applications should not be interpreted as being limiting, as the inventive concepts presented herein cover and contemplate multiple uses, applications, and configurations of the robotic vehicle 220.

For example, in some non-limiting embodiments of the present technology, the robotic vehicle 220 may be used for transporting various items to a user. In this regard, in some non-limiting embodiments of the present technology, the items may comprise items ordered by the user, such as consumer goods, for example, from an online listing platform (such as a Yandex^{™} Market^{™} online listing platform, an Avito^{™} online listing platform, and the like). In this example, the robotic vehicle 220 may be owned by the online listing platform or by another entity associated with the online listing platform.

In other non-limiting embodiments of the present technology, the items may be disposed within the robotic vehicle 220 to be delivered to multiple users. Similar to the example provided above, the items may have been ordered by the users, and the robotic vehicle 220 may thus be used for delivering respective items to each of the multiple users. However, in another example, the items may not have been ordered by the users and may rather be for sale; and the robotic vehicle 220 may thus be caused to circulate around the multiple users offering them to buy one or more items contained therein. In this example, the items may include certain foods or drinks, such as, without limitation, sandwiches, pizza, or soda drinks; stationary; and the like

In yet another example, the robotic vehicle 220 may be owned by an entity, such as a firm, and used for distributing various items, such as stationary, documents, or lunch boxes, as an example, amongst employees thereof. In yet another example, the robotic vehicle may be used by individual(s) for transporting the items.

The robotic vehicle 220 may be a fully autonomous vehicle, or a partially autonomous vehicle, in which a human operator remotely controls some aspects of the vehicle's operation, while other aspects are automated. As one non-limiting example, the robotic vehicle 220 may operate autonomously unless or until it encounters an unexpected or unusual situation that it is unable to handle autonomously, at which time a remote human operator can be contacted. It should be noted that specific parameters of the robotic vehicle 220 are not limiting, these specific parameters including for example: manufacturer, model, year of manufacture, vehicle weight, vehicle dimensions, vehicle weight distribution, vehicle surface area, vehicle height, motor type, tire type (if tires are used), power system, or other characteristics or parameters of a vehicle.

According to the present technology, the implementation of the computing device 210 is not particularly limited. For example, the computing device 210 can be implemented as a vehicle motor control unit, a vehicle CPU, a computer system built into the robotic vehicle 220, a plug-in control module, and the like. Thus, it should be noted that the computing device 210 may or may not be permanently associated with the robotic vehicle 220.

The computing device 210 can include some or all of the components of the computer system 100 depicted in Figure 1, depending on the particular implementation. In certain implementations, the computing device 210 is an on-board computer device and includes the processors 102, the solid-state drive 120 and the random-access memory 130. In other words, the computing device 210 includes hardware and/or software and/or firmware, or a combination thereof, for processing data described in greater detail below.

In some non-limiting implementations of the present technology, the communication network 240 is the Internet. In alternative non-limiting implementations of the present technology, the communication network 240 can be implemented as any suitable local area network (LAN), wide area network (WAN), a private communication network or the like. It should be expressly understood that implementations for the communication network 240 are for illustration purposes only. A communication link (not separately numbered) is provided between the computing device 210 and the communication network 240, the implementation of which will depend, inter alia, on how the computing device 210 is implemented. Merely as an example and not as a limitation, the communication link can be implemented as a wireless communication link. Examples of wireless communication links may include, but are not limited to, a 3G communication network link, a 4G communication network link, and the like. The communication network 240 may also use a wireless connection with the servers 235.

In some implementations of the present technology, the servers 235 are implemented as computer servers and can include some or all of the components of the computer system 100 of Figure 1. In one non-limiting example, the servers 235 are implemented as a Dell^{™} PowerEdge^{™} Servers running the Microsoft^{™} Windows Server^{™} operating system but can also be implemented in any other suitable hardware, software, and/or firmware, or a combination thereof.

In some non-limiting implementations of the present technology, the processor 110 of the computing device 210 can be in communication with the servers 235 to receive one or more updates. Such updates can include, but are not limited to, software updates, map updates, route updates, geofencing updates, weather updates, and the like. In some non-limiting implementations of the present technology, the computing device 210 can also be configured to transmit to the servers 235 certain operational data, such as routes traveled, traffic data, performance data, and the like. Some or all such data transmitted between the robotic vehicle 220 and the servers 235 may be encrypted and/or anonymized.

It should be noted that a variety of sensors and systems may be used by the computing device 210 for gathering information about surroundings 250 of the robotic vehicle 220. As further depicted in Figure 2, the robotic vehicle 220 may be equipped with a plurality of sensor systems 280. It should be noted that different sensor systems from the plurality of sensor systems 280 may be used for gathering different types of data regarding the surroundings 250 of the robotic vehicle 220.

In one example, the plurality of sensor systems 280 may include various optical systems including, *inter alia,* one or more camera-type sensor systems that are mounted to the robotic vehicle 220 and communicatively coupled to the processor 110 of the computing device 210. Broadly speaking, the one or more camera-type sensor systems may be configured to gather image data about various portions of the surroundings 250 of the robotic vehicle 220. In some cases, the image data provided by the one or more camera-type sensor systems can be used by the computing device 210 for performing object detection procedures. For example, the computing device 210 can be configured to feed the image data provided by the one or more camera-type sensor systems to an Object Detection Neural Network (ODNN) that has been trained to localize and classify potential objects in the surroundings 250 of the robotic vehicle 220.

In another example, the plurality of sensor systems 280 can include one or more radar-type sensor systems that are mounted to the robotic vehicle 220 and communicatively coupled to the processor 110. Broadly speaking, the one or more radar-type sensor systems may be configured to make use of radio waves to gather data about various portions of the surroundings 250 of the robotic vehicle 220. For example, the one or more radar-type sensor systems may be configured to gather radar data about potential objects in the surroundings 250 of the robotic vehicle 220, such data potentially being representative of a distance of objects from the radar-type sensor system, orientation of objects, velocity and/or speed of objects, and the like.

In a further example, the plurality of sensor systems 280 can include one or more LIDAR systems that are mounted to the robotic vehicle 220 and communicatively coupled to the processor 110. Broadly speaking, a LIDAR system is configured to capture data about the surroundings 250 of the robotic vehicle 220 used, for example, for building a multi-dimensional map of objects in the surroundings 250 of the robotic vehicle 220. The LIDAR system can be mounted to the robotic vehicle 220 in a variety of locations and/or in a variety of configurations for gathering information about the surroundings 250 of the robotic vehicle 220.

Thus, in some non-limiting embodiments of the present technology, at least one of the one or more LIDAR systems and the one or more radar-type sensor systems of the plurality of sensor systems 280 can be used by the processor 110 as a proximity sensor to determine presence of nearby objects in the surroundings 250 of the robotic vehicle 220. However, it should be noted that the plurality of sensor systems 280 may include other implementations of the proximity sensor, such as, without limitation, a capacitive proximity sensor, an inductive proximity sensor, an ultrasonic proximity sensor, and the like.

Thus, according to certain non-limiting embodiments of the present technology, based on the data received from one or more of the plurality of sensor systems 280, the processor 110 of the computing device 210 can be configured to generate a trajectory for the robotic vehicle 220 and cause it to move along the so determined trajectory - such as from a starting location to a target location, associated with a delivery destination, as an example.

Further, in some non-limiting embodiments of the present technology, based on the data received from one or more of the plurality of sensor systems 280, the processor 110 can be configured to determine presence of a given object in the surroundings 250 of the robotic vehicle 220. In some non-limiting embodiments of the present technology, the given object can be a predetermined object located at the target location of the robotic vehicle 220. For example, the given object may be associated with the target location and comprise, without limitation, at least one of a predetermined piece of furniture and a device located therein. Also, in another example, the given object may comprise a person to which the delivery of the robotic vehicle 220 is destined.

Further, in some non-limiting embodiments of the present technology, upon detecting the given object, the processor 110 can be configured to cause the robotic vehicle 220 to perform one or more predetermined actions - such as provide access to contents thereof, as will be described below.

### Robotic Vehicle Structure

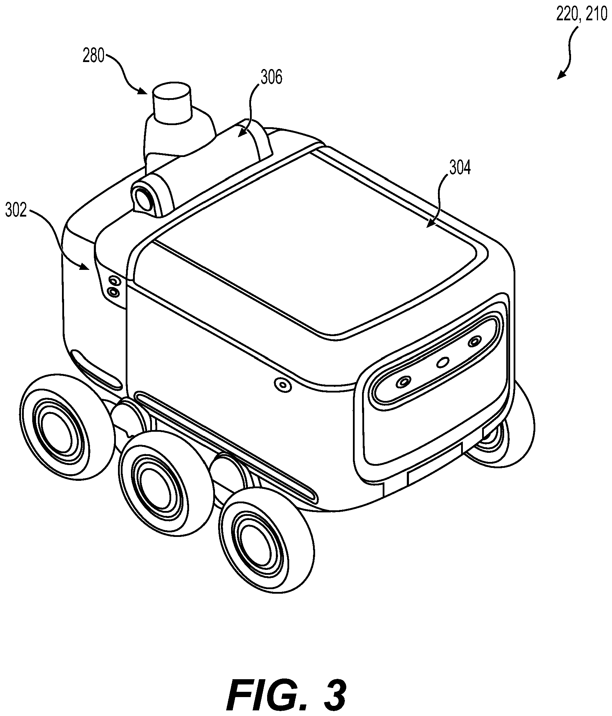

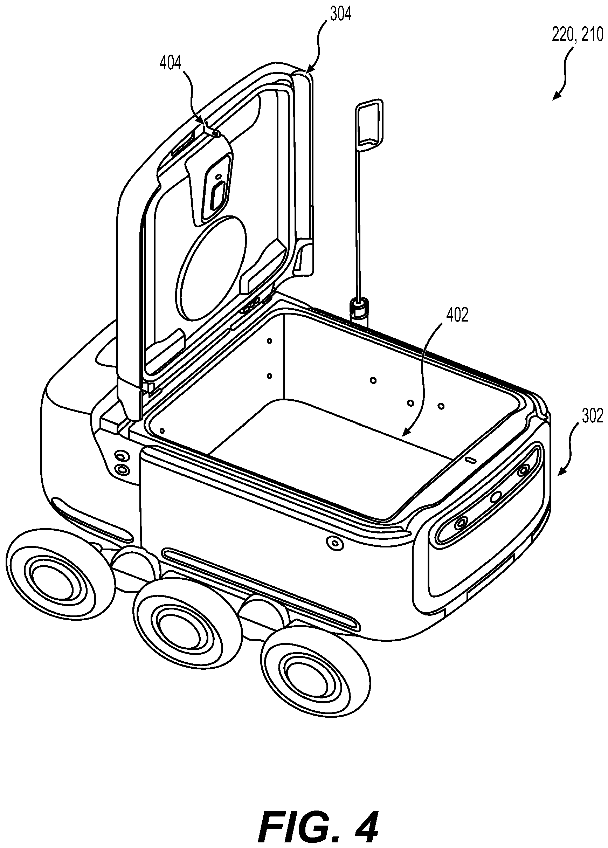

With reference to Figures 3 and 4, there is depicted a perspective view of the robotic vehicle 220 described above in a closed and open configurations thereof, respectively, in accordance with certain non-limiting embodiments of the present technology.

As it can be appreciated, the robotic vehicle 220 may comprise a robotic vehicle body 302 defining a storage compartment 402 for housing the items to be delivered to the target location of the robotic vehicle 220 defined by the trajectory thereof. It should be noted that dimensions and configuration of the storage compartment 402 are not limited and may depend on a specific implementation of the robotic vehicle 220. For example, in some non-limiting embodiments of the present technology, as depicted in Figure 4, the robotic vehicle body 302 may define the storage compartment 402 having a single section. However, in other non-limiting embodiments of the present technology (not depicted), the robotic vehicle body 302 may define the storage compartment 402 including multiple sections.

Also, in yet other non-limiting embodiments of the present technology, the storage compartment 402 may include respective sections (not depicted) for additional equipment of the robotic vehicle 220. The additional equipment of the robotic vehicle 220 may include, for example, without limitation, at least one of a cooling element, such as a fan, radiator, and the like; a power source of the robotic vehicle 220, such as a battery; a heating element, such as an infrared light source; and others.

Further, for securing the items in the storage compartment 402, the robotic vehicle 220 may include a lid 304 coupled to the robotic vehicle body 302 via an opening mechanism 306. As it can be appreciated, a rim (not separately labelled) of the lid 304 may be configured to engage with the robotic vehicle body 302 for a secure contact therewith. Also, in some non-limiting embodiments of the present technology, the lid 302 may include a lock 404 which comprises a latch (not separately labelled) that can be arranged to be received in a corresponding aperture (not separately labelled) defined in the robotic vehicle body 302 for locking the storage compartment 402.

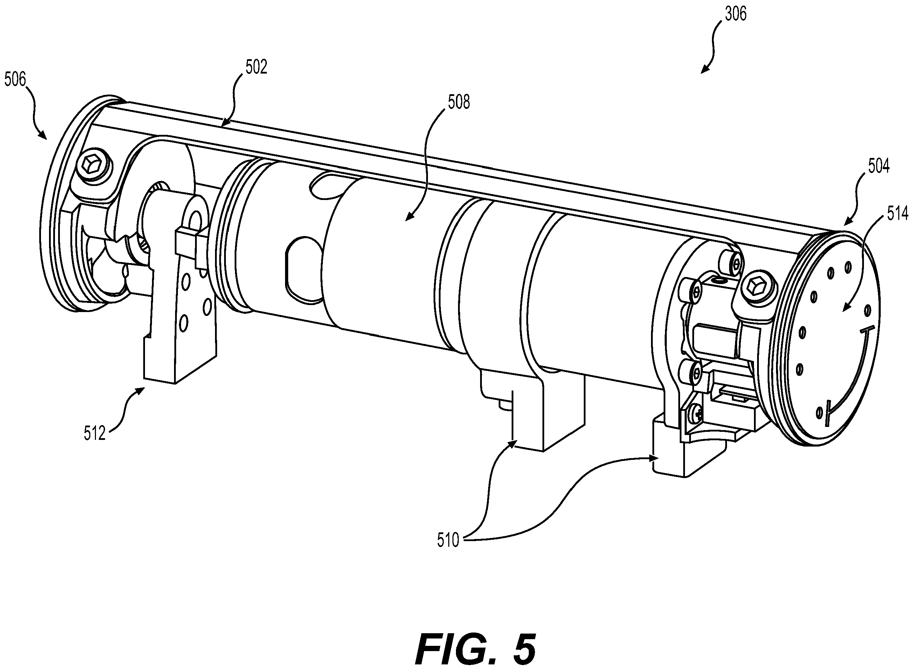

The opening mechanism 306, on one side thereof, can be coupled to the robotic vehicle body 302, and, on the other side thereof, to the lid 304, via hinge joints, as an example. Further, as will become apparent from description provided below, the opening mechanism 306 may comprise an actuator (such as an actuator 508 depicted in Figure 5) configured to impart a torque onto the hinge joints for actuating the lid 304. Thus, in some non-limiting embodiments of the present technology, in response to determining the presence of the given object as described above, the processor 110 of the computing device 210 can be configured to unlock the lock 404 and to cause the opening mechanism 306 to bring the lid 304 from the closed configuration to the open configuration thereof, thereby providing access to contents of the storage compartment 402 of the robotic vehicle 220.

However, as alluded to above, uneven distribution of the torque along the lid 304 during actuation thereof may cause uneven wear of the hinge joints of the lid 304 causing the latter to skew. This may further result in premature damage of at least one of the hinge joints and thus affect secure and safe transportation of the items in the storage compartment 402.

Thus, the non-limiting embodiments of the present technology are directed to a configuration of the opening mechanism 306 installable on an exterior of the robotic vehicle body 302. The opening mechanism 306 has a semi-tubular body allowing evenly distributing the torque imparted onto the lid 304. In so doing, the opening mechanism 306 described herein may help prevent the lid 304 from skewing during the actuation thereof in the hinge joints, thereby providing secure closure of the lid 304 to the robotic vehicle body 302 for a longer period.

Structure and configuration of the opening mechanism 306, in accordance with certain non-limiting embodiments of the present technology, will now be described.

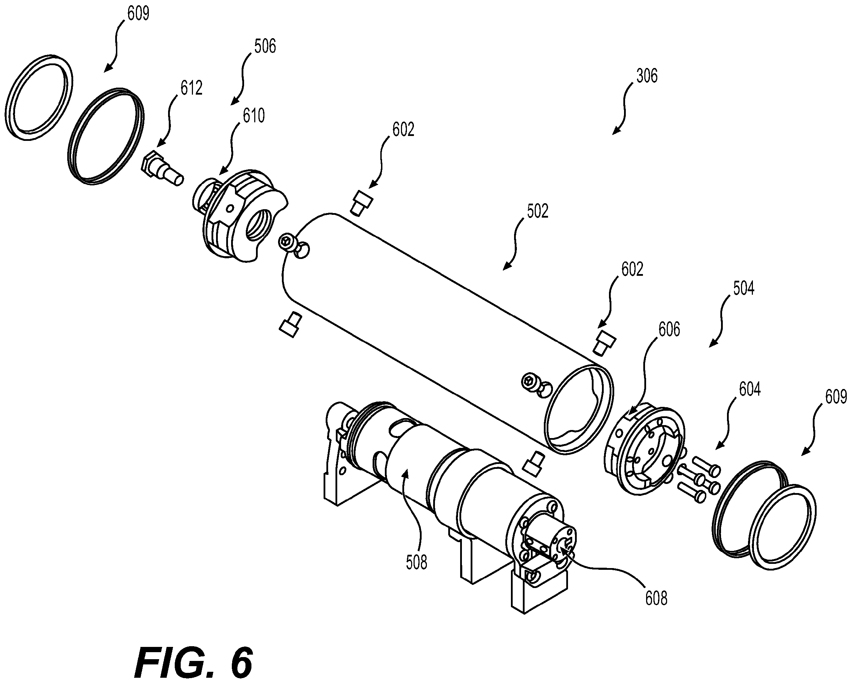

With reference to Figures 5 and 6, there is depicted a perspective and exploded view, respectively, of the opening mechanism 306 of the robotic vehicle 220, in accordance with certain non-limiting embodiments of the present technology.

According to certain non-limiting embodiments of the present technology, the opening mechanism 306 comprises a semi-tubular body 502. As depicted in Figures 5 and 6, the semi-tubular body 502 may comprise an open cylindrical body, that is, cross-section thereof comprises an open circle; however, in other non-limiting embodiments of the present technology, other form factors, such as rectangular or triangular, can also be used without departing from the scope of the present technology.

Further, the semi-tubular body 502 of the opening mechanism 306 can be coupled to an exterior of the lid 304. How the semi-tubular body 502 can be coupled to the exterior of the lid 304 is not limited and may include, for example, using couplers (bolts and the like), welding or gluing the semi-tubular body 502 to the exterior surface of the lid 304.

Further, the semi-tubular body 502 of the opening mechanism 306 comprises a first rotational plate 504 disposed at a first edge of the semi-tubular body 502. More specifically, the first rotational plate 504 can be of substantially a circular form, diameter of which may correspond to a diameter of the semi-tubular body 502. Further, the first rotational plate 504 can define, onto a surface thereof facing an inside of the semi-tubular body 502, an annular protrusion 606 receivable into the semi-tubular body 502, whereby the first rotational plate 504 can be configured to engage with an inner surface of the semi-tubular body 502. Additionally, the first rotational plate 504 can be fixed to the semi-tubular body 502, for example, using bolts 602 receivable into respective holes defined therefor in the semi-tubular body 502 and the annular protrusion 606 of the first rotational plate 504. However, other ways of coupling the first rotational plate 504 to the first edge of the semi-tubular body 502, such as welding or gluing the annular protrusion 606 thereto, are also envisioned without departing from the scope of the present technology.

Additionally, in some non-limiting embodiments of the present technology, as depicted in Figure 5, the fist rotational plate 504 can include a cover 514 couplable to the first rotational plate 504 via a screw or the like, as an example. Further, as depicted in Figure 6, in additional non-limiting embodiments of the present technology, for protecting the inside of the opening mechanism 306 from moisture, the cover 514 can be coupled to the first rotational plate 504 through a set of seal rings 609. A material of each one of the set of seal rings 609 is not limited, and may be, for example, any suitable type of synthetic rubber or thermoplastic.

As it can be appreciated, the semi-tubular body 502 defines a hollow inside and is thus configured to accommodate therein an actuator 508 communicatively coupled to the processor 110 of the robotic vehicle 220. According to certain non-limiting embodiments of the present technology, the actuator 508 includes actuator supports 510 allowing coupling the actuator 508 to an exterior of the robotic vehicle body 302. It should be noted that how the actuator supports 510 can be implemented is not limited. For example, as depicted in Figures 5 and 6, each of the actuator supports 510 may be implemented of having a rectangular form factor, dimensions of which may be determined based on dimensions of the semi-tubular body 502. A manner of coupling the actuator supports 510 to the exterior of the robotic vehicle body is also not limited and may be similar to coupling the semi-tubular body 502 to the exterior of the lid 304.

Further, in accordance with certain non-limiting embodiments of the present technology, the actuator 508 may include an actuator shaft 608 operatively couplable to the first rotational plate 504. For example, the actuator shaft 608 can be coupled to the first rotational plate 504 using screws 604 receivable into respective holes defined therefor in a side surface (not separately labelled) of the actuator shaft 608 and a front surface of the first operational plate 504. In some non-limiting embodiments of the present technology, as depicted in Figure 6, the front surface of the first rotational plate 504 can define the respective holes for receiving the screws 604 in a circular indent (not separately labelled) therein; the depth and diameter of the circular indent may predetermined based on dimensions of the actuator shaft 510, as an example.

According to certain non-limiting embodiments of the present technology, the actuator 508 can be configured to output a desired torque onto the actuator shaft 608. To that end, it is not limited how the actuator 508 can be implemented; and in some non-limiting embodiments of the present technology, the actuator 508 can be implemented as a motor, such as an electrical motor. However, in other non-limiting embodiments of the present technology, the actuator 508 can be implemented as one of a hydraulic actuator and pneumatic actuator without departing from the scope of the present technology.

In a specific non-limiting example, the actuator 508 can be implemented as a DC servo motor of one of the types available from **FESTO AG & CO. KG** of Rechbergstrasse 3 Denkendorf, 73770 Germany. It should be expressly understood that the DC servo motor can be implemented in any other suitable equipment.

Thus, according to certain non-limiting embodiments of the present technology, in response to determining the presence of the given object, the processor 110 of the computing device 210 of the robotic vehicle 220 can be configured to cause the actuator 508 to impart the torque, via the actuator shaft 608, onto the first rotational plate 504, thereby causing the semi-tubular body 502 to pivot and actuate the lid 304 from the closed to open configuration thereof as described above.

In some non-limiting embodiments of the present technology, the torque output by the actuator 508 onto the actuator shaft 608 can be predetermined such that it is sufficient to lift the lid 304 at a given opening angle and further to lock it down using the lock 404 after closing. In some non-limiting embodiments of the present technology, the given opening angle of the lid 304 can be a single opening angle and comprise, for example, 60 degrees or 90 degrees relative to a motion plane of the robotic vehicle 220. However, in other non-limiting embodiments of the present technology, the given opening angle can be one of a plurality of opening angles of the lid 304 and associated, for example, with respective dimensions of an item to be picked up from the robotic vehicle upon lifting the lid 304 at the given opening angle.

However, for more even distribution of the torque imparted by the actuator 508 along the lid 304, in some non-limiting embodiments of the present technology, the semi-tubular body 502 of the opening mechanism 306 may include a second rotational plate 506 disposed at a second edge of the semi-tubular body 502, opposite to the first edge thereof. Generally speaking, in some non-limiting embodiments of the present technology, the second rotational plate 506 can be implemented similarly to the first rotational 504. The second rotational plate 506 can be coupled to the semi-tubular body 502 similarly to how the first rotational plate 504 is coupled thereto, such as using the bolts 602.

However, unlike the first rotational plate 504, the second rotational plate 506 is not operatively coupled to the actuator 508, in at least some of the non-limiting embodiments of the present technology. Instead, according to certain non-limiting embodiments of the present technology, the second rotational plate 506 can be coupled to the exterior of the robotic vehicle body 302 via a plate support 512. Generally speaking, the plate support 512 can be implemented and coupled to the exterior of the robotic vehicle body 302 similar to that how the actuator supports 510 are coupled thereto.

Further, in some non-limiting embodiments of the present technology, the second rotational plate 506 and the plate support 512 can be interconnected via a bearing 610 of the second rotational plate 506. As it can be appreciated, in these embodiments, a ring (not depicted) of the bearing 610 can be configured to engage with and provide free rotation to an outer shaft (not depicted) of the plate support 512. Additionally, the outer shaft (not depicted) of the plate support 512 can be fixed within the bearing 610 of the second rotational plate 506, for example, using a bolt 612.

Thus, according to certain non-limiting embodiments of the present technology, having the second rotational plate 506 allows the semi-tubular body 502 to transmit at least a portion of the torque, imparted by the actuator 508 onto the first rotational plate 504, to the second rotational plate 506. In other words, the semi-tubular body 502 can allow evenly distributing the torque, imparted by the actuator 508 onto the first rotational plate 504, between the first rotational plate 504 and the second rotational plate 506.

By doing so, according to certain non-limiting embodiments of the present technology, the opening mechanism 306 can allow for even wear of both joints between the opening mechanism 306 and the lid 304, namely, (1) between the actuator 508 and the actuator shaft 608 and (2) between the outer shaft (not depicted) of the plate support 512 and the bearing 610 of the second rotational plate 506. This may further allow preventing skewing of the lid 304 during actuation thereof by the opening mechanism 306 and may thus allow extending lifespan of components thereof, such as the actuator 508 and the bearing 610. Accordingly, certain non-limiting embodiments of the present technology may provide improved reliability of transporting the items in the storage compartment 402 of the robotic vehicle 220.

Modifications and improvements to the above-described implementations of the present technology may become apparent to those skilled in the art. The foregoing description is intended to be exemplary rather than limiting. The scope of the present technology is therefore intended to be limited solely by the scope of the appended claims.

## Claims

1. A robotic vehicle (220) comprising:
a robotic vehicle body (302) defining a storage compartment (402);
a lid (304) for closing the storage compartment (402); and
an opening mechanism (306) installable on an exterior of the robotic vehicle body (302) connecting the lid (304) to the robotic vehicle body (220) for actuating the lid (304) between an open configuration and a closed configuration, the opening mechanism (306) comprising:
a semi-tubular body (502) coupled to an outer surface of the lid (304),
the semi-tubular body (502) including a first rotational plate (504) disposed at a first edge thereof; and
an actuator (508) disposed inside of the semi-tubular body (502) and coupled to the exterior of the robotic vehicle body (302), the actuator (508) being operatively coupled to an inner surface of the first rotational plate (504), the actuator (508) being configured to impart a torque onto the first rotational plate (504), thereby causing the semi-tubular body (502) to pivot and actuate the lid (304) for providing access to the storage compartment (402).

2. The robotic vehicle (220) of claim 1, wherein the semi-tubular body (502) further comprises a second rotational plate disposed at a second edge thereof, opposite to the first edge.

3. The robotic vehicle (220) of claim 2, wherein the semi-tubular body (502) is configured for evenly distributing the torque imparted by the actuator (508) between the first rotational plate (504) and the second rotational plate (506) during the actuating the lid (304) between the open configuration and the closed configuration.

4. The robotic vehicle (220) of claim 3, wherein the opening mechanism (306) is configured for preventing skewing of the lid (304) during actuation thereof.

5. The robotic vehicle (220) of any one of claims 1 to 4, wherein the actuator (508) is configured to impart the torque for causing the lid (304) to lift at one of a plurality of opening angles.

6. The robotic vehicle (220) of any one of claims 1 to 5, further comprising:
a processor (110) installed within the robotic vehicle body (302) and communicatively coupled to the actuator (508);
a proximity sensor installed within the robotic vehicle body (302) and communicatively coupled to the processor (110),
the proximity sensor being configured for determining presence of an object in a surrounding area of the robotic vehicle (220); and wherein the processor (110) is configured to cause the actuator (508) to cause the semi-tubular body (502) to pivot in response to the determining the presence of the object.

7. The robotic vehicle (220) of claim 6, wherein the proximity sensor is implemented as a LiDAR sensor.

8. The robotic vehicle (220) of any one of claims 1 to 7, being for delivery of one of consumer-ordered and non-ordered items.

9. The robotic vehicle (220) of any one of claims 1 to 8, wherein the actuator (508) is a motor.

10. An opening mechanism (306) for actuating a lid (304) of a robotic vehicle (220) between an open configuration and a closed configuration, the opening mechanism (306) being installable on an exterior of a robotic vehicle body (302) of the robotic vehicle (220) and coupling the lid (304) to the robotic vehicle body (302); the opening mechanism (306) comprising:
a semi-tubular body (502) coupled to an outer surface of the lid (304),
the semi-tubular body (502) including a first rotational plate (504) disposed at a first edge thereof; and
an actuator (508) disposed inside of the semi-tubular body (502) and coupled to the exterior of the robotic vehicle body (302), the actuator (508) being operatively coupled to an inner surface of the first rotational plate (504), the actuator (508) being configured to impart a torque onto the first rotational plate (504), thereby causing the semi-tubular body (502) to pivot and actuate the lid (304).

11. The opening mechanism (306) of claim 10, wherein the semi-tubular body (502) further comprises a second rotational plate (506) disposed at a second edge thereof, opposite to the first edge.

12. The opening mechanism (306) of claim 11, wherein the semi-tubular body (502) is configured for evenly distributing the torque imparted by the actuator (508) between the first rotational plate (504) and the second rotational plate (506) during the actuating the lid (304) between the open configuration and the closed configuration.

13. The opening mechanism (306) of claim 12, being configured for preventing skewing of the lid (304) during actuation thereof.

14. The opening mechanism (306) of any one of claims 10 to 13, wherein the actuator (508) is configured to impart the torque for causing the lid (304) to lift at one of a plurality of opening angles.
